# EUROPEAN PATENT APPLICATION

(11) **EP 2 388 549 A1**
(43) Date of publication of application: **23.11.2011**
(21) Application number: 11150016.1
(22) Date of filing: 03.01.2011
(51) Int. Cl.: F41H 5/04

(54) **Textile structure resistant to the impact of bullets and to the penetration of sharp and/or pointed elements and its production method**

(30) Priority: 18.05.2010 IT MI20100881
(71) Applicant: Fratelli Citterio S.p.A., 20052 Monza (IT)
(72) Inventor: Citterio, Giorgio Celeste, 20052, Monza (MB) (IT)
(74) Representative: Coletti, Raimondo

(57) **Abstract**

The present invention relates to a textile structure resistant to the impact of projectiles (bullet-proof) and to the penetration of sharp and/or pointed elements, at least partially produced with ballistic yarns, said textile structure being at least partially impregnated with a polycarbonate-based resin, in the form of a copolymer or in a mixture with other polymers, dissolved in a solvent, and having a thickness at least 10% lower than the thickness corresponding to its weaving phase.

The present invention also relates to a method for the production of a textile structure resistant to the impact of projectiles and to the penetration of sharp and/or pointed elements, comprising the phases consisting in forming a textile structure at least partially produced with ballistic yarns; at least partially impregnating said textile structure with a polycarbonate-based resin, in the form of a copolymer or in a mixture with other polymers, dissolved in a solvent; eliminating the solvent used for the solution from the impregnated textile structure; pressing the impregnated textile structure deprived of the solvent until a reduction in the thickness of at least 10% of the thickness in the forming phase, is obtained.

## Description

The present invention relates to a textile structure resistant to the impact of projectiles and to the penetration of sharp elements, such as blades and/or pointed elements, such as needles or ice picks, and the relative production method.

Structures of this type are mainly used for providing personal protection, such as for example clothing items (stab-proof and bullet-proof vests).

In this specific field, two types of textile structures are known: structures resistant to the impact of bullets and structures resistant to the penetration of sharp and/or pointed elements.

The textile structures of the known type which offer the best bullet-proof characteristics generally comprise a unidirectional or semi-unidirectional construction.

Examples of these structures are provided by US 7,148,162 B2 and EP0683374 B1, both in the name of Andrew D. Park, US 5,354,605, EP0191306B1 and US 4,623,574 in the name of Allied Signal Inc., WO97/00766 in the name of DSM N.V. and EP1.595.105 in the name of Citterio. These structures have partially substituted traditional weft and warp fabrics.

The yarns with which these structures are produced, so-called ballistic yarns, are composed of high-tenacity fibres as described, for example, in US 5,354,605 (columns 2-7), which are at least partially impregnated or coated with elastomeric, plastomeric, viscous or visco-elastic polymers generally having an elastic modulus advantageously lower than 41 MPa.

It is known, in fact, that the resistance to the impact of projectiles is inversely proportional to the elastic modulus of the polymer which impregnates or coats ballistic yarn fibres. In order to absorb and dissipate the energy correlated to the impact of a projectile, the fibres forming ballistic yarns must be deformed and elongated as much as possible, contemporaneously. The low elastic modulus of the polymeric substance allows the fibres to be lengthened and elastically deformed, absorbing the larger amount of energy.

Although these textiles structures provide a good resistance to impact with bullets, they do not offer, however, a satisfactory resistance to the penetration of sharp and/or pointed elements.

Currently known textile structures resistant to the penetration of sharp and/or pointed elements generally consist of weft and warp fabrics with a plain weave. Rigid polymeric substances with an elastic modulus normally higher than 2,000 MPa are applied with conventional process.

These polymeric substances are thermosetting polymers, such as for example acrylic, epoxy, phenolic and polyesters, as described for example in US 4,522,871.

Although these textile structures offer a good resistance to the penetration of sharp and/or pointed elements, they do not provide, however, an adequate resistance to the impact of bullets. The polymeric substance applied to these, in fact, rigidly binds the fibres of the yarns making the structure practically monolithic. A sharp element is consequently not capable of separating the fibres and penetrating through this structure. The rigidity of the polymeric substance applied, however, doesn't allow that the fibres can be elastically deformed in order to absorb and dissipate the high energy related to the impact of a projectile.

Furthermore, the rigid thermosetting polymeric substances require long terms for the complete polymerisation. For this reason, the textile structures to which these polymeric substances are applied, are pressed batchwise into sheets having standard dimensions of about 150 × 250 cm, whose subsequent processing for obtaining templates of a ballistically protective article creates inevitable scraps of material.

A further disadvantage correlated to the impregnation of these textile structures with rigid thermosetting polymers consists in the fact that these structures, after being impregnated with the resin must be kept in refrigerator at temperature even below 0°C in order to avoid unsuitable hardening which would not allow the necessary finishing to be completed properly. Various thermosetting resins, among which, in particular, phenolic and polyester resins have an unpleasant odour which remains in the textile structures impregnated with these.

In order to combine both of the properties relating to resistance to the impact of projectiles and resistance to the penetration of sharp and/or pointed elements, as provided for by the various reference regulations, "hybrid" structures are currently produced, comprising at least two structures, of which one has properties of resistance to the impact of projectiles and the other properties of resistance to the penetration of sharp and/or pointed elements.

These hybrid structures however are heavy and rigid and consequently the clothing items produced with these are uncomfortable for those who are wearing them.

In order to overcome some of the disadvantages described above, the document WO97/21334 in the name of Du Pont proposes the use of a thermoplastic ionomeric resin in form of a film with a tensile elastic modulus of about 1,000 MPa.

Also in this case, however, there are two solutions: one which is specific for resistance to the impact of projectiles, in which a polymeric film is applied on one of the opposite sides of the structure, and one resistant to the penetration of sharp and/or pointed elements, in which the polymeric film is applied on both opposite sides of the structure.

These structures, moreover, offer resistance to the impact of projectiles or to the penetration of sharp/pointed elements only near at room temperature, whereas at temperature values higher than room temperature, they lose partially their properties.

Finally, in EP1.102.958B1 in the name of Teijin Twaron GmbH, polycarbonate (PC) film, of the type LEXAN^{®} 103 of GE Plastic, having a modulus in the order of 2,500 Mpa is disclosed. In this case, however, the high viscosity of the polycarbonate film, even if subjected to high pressures and temperatures as described in this document, does not allow a sufficient fraction of fibres forming the yarn of the fabric, to be impregnated. The fibres are therefore not enough bound to each other, providing a reduced resistance to the penetration of sharp and/or pointed elements.

A scope of the present invention is to propose a textile structure which offers resistance to the impact of projectiles and contemporaneously to the penetration of sharp and/or pointed elements.

A further scope of the present invention is to provide a textile structure which is more flexible than those currently available on the market and which can also be used for producing comfortable articles for personal protection.

Another scope of the present invention is to provide a textile structure which is practically odourless and maintains its characteristics and properties within a wide temperature range.

Yet another scope of the present invention is to provide a production method of a textile structure which is resistant to the impact of projectiles and to the penetration of sharp and/or pointed elements, which can be easily produced and with reduced costs.

These scopes according to the present invention are achieved with a textile structure which is resistant contemporaneously to the impact of projectiles and to the penetration of sharp and/or pointed elements as specified in claim 1.

Further characteristics are described in the dependent claims 2÷12.

These scopes are also achieved with a production method of a textile structure which is contemporaneously resistant to the impact of projectiles and to the penetration of sharp and/or pointed elements as specified in claim 13.

Further characteristics are described in the dependent claims 14-21.

The characteristics of the present invention will appear more evident from the following illustrative and non-limiting description, referring to the enclosed schematic drawings, in which:
figure 1 is an example of a weft and warp textile structure, which can be used for the production of the textile structure according to the present invention;
figure 2 is an example of textile structure where two layers of unidirectional yarn superimposed at an angle of 90°+/-5° are interconnected by a secondary structure 12-13 of woven yarn.
figures 3 and 4 show schematic sectional views of the textile structure of figure 1 before and after pressing.

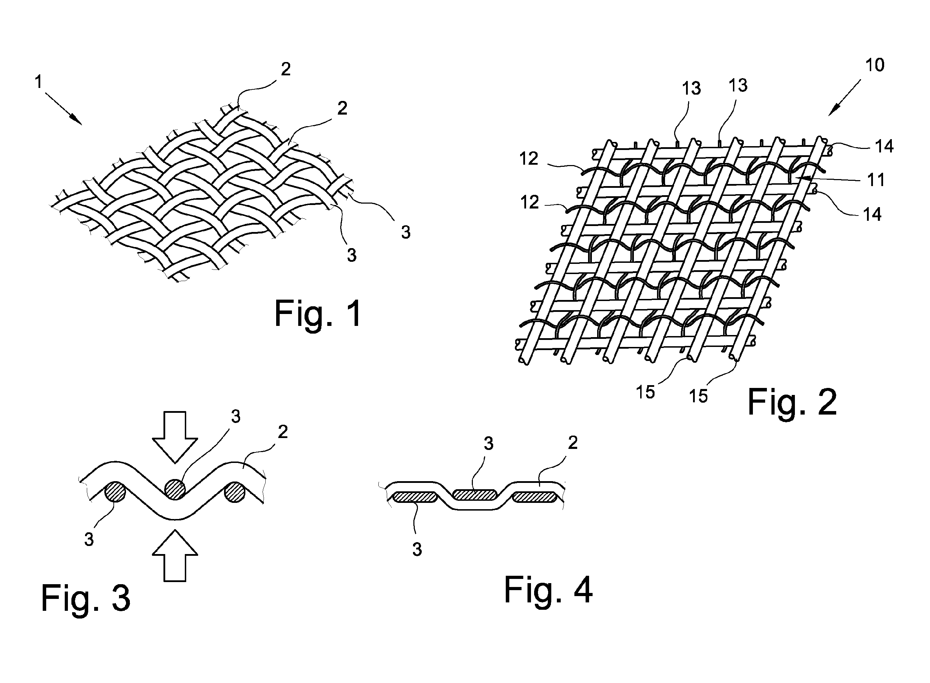

With reference to figure 1, in the fabric 1 at least part of the weft yarns 2 and/or warp yarns 3 and, in particular, all the weft yarns 2 and warp yarns 3 are composed of ballistic yarns.

With reference to figure 2, in the structure 10, at least part of the unidirectional yarns 14 and 15, of one or both of the layers, are ballistic yarns, even if the yarns 12 and yarns 13 can also at least partially include ballistic yarns.

As is known in the field, ballistic yarns are yarns having tenacity and tensile modulus, with the following values:
- tenacity ≥ 7 g/dtex (according to ISO-Norm 627-1-2)
- tensile modulus ≥ 200 g/dtex (according to ISO-Norm R527)
- energy to break ≥ 8 J/g (according to ASTMD Norm 2256)

These ballistic yarns, for purely illustrative and non-limiting purposes, comprise fibers: like aramidic, copolyaramidic, polyvinyl alcohol, polybenzo-oxazole (PBO), polybenzothiazole (PBT), high-molecular-weight polyethylene, glass, basalt or carbon, also mixed with each other.

In a preferred embodiment, the ballistic yarns are composed of continuous filament fibres, parallel to each other; it is also possible, however, to use twisted, texturized, taslanized yarns, also mixed with each other.

The ballistic yarns can be pre-treated by impregnation with polymers, known in the field like for example, silicon or fluoro-carbon polymers, in order to give water-repellency, or other polymers, such as for example, polybutenes, polyacrylates, poly-isobutylene and polyesters, in order to modify the adhesion characteristics of the polycarbonate-based polymers according to the present invention to the fibres of the yarn.

The ballistic yarns have a count ranging from 25 dtex to 10,000 dtex, preferably ranging from 250 dtex to 4,400 dtex.

By adjusting the count of the ballistic yarns used and the number of yarns per centimetre present in the structures indicated above, but not only, the weight of the fabric can range from 50 g/m² to 1,000g/m², preferably from 100 g/m² to 500 g/m².

One of the characteristic of the present invention is the method to apply the polycarbonate based polymers to the fabric. The polycarbonate based polymer is dissolved in an appropriate solvent then this solution is applied to the above mentioned textile structures by conventional process.

The impregnation can also be only partial, i.e. it can only involve part of the fibres present in the textile structure, for example even only 10% of these, so that the quantity of fibres of the textile structure which is impregnated with the polycarbonate-based resin varies from 10% to 100% of the total fibres.

Said polycarbonate-based resin dissolved in a solvent can also be applied, for example, to only one of the two opposite sides of the textile structure with process known to the persons skilled in the art.

For the purposes of the present invention, a polycarbonate-based resins refers to:
a) a mixture containing at least 10% by weight of polyester of carbonic acid of Bisphenol-A, wherein the remaining fraction of the mixture comprises resins such as, for example, polystyrenes, polyesters, polyamides, poly-iso-butylenes, polybutenes, polyphenols, ABS;
b) a copolymer in which the repetitive units consist for at least 10% of ester of carbonic acid of Bisphenol-A.

Said polycarbonate-based resin must have the following mechanical characteristics:
- elongation at break > 100%, according to ISO-Norm RS27;
- tensile modulus ≥ 1500 MPa, according to ISO-Norm R527;
- no impact fracture according to the Charpy test at a temperature of - 30°C, according to the standard ISO-Norm 179-1 EU.

In a preferred embodiment, for example, if the polycarbonate-based resin consists of a copolymer (case b), its remaining repetitive units are represented by 1,1-bis(4-hydroxyphenyl)-3,3,5-trimethylcyclohexane (BPTMC), even if other polymers are not excluded.

For illustrative purposes, the following products can be used as further components of polycarbonate-based copolymers: siloxane, succinic anhydride, diphenylcarbonate, poly(alkyleneterephthalate).

The polycarbonate-based resin is dissolved in an appropriate solvent selected upon the characteristics of the resin itself. Solvents which can be used for example are: acetone, methyl-ethyl-ketone, ethyl acetate, perchloro-ethylene, water.

The solvent is present in a quantity which ranges from 10% to 90%.

Mineral fillers such as boron carbide, silicon carbide, silicon oxide or similar in powder form can be added to the solution thus obtained.

Other polymeric substances, also previously dissolved, can also be present in the solution, such as fluoro carbon or silicon polymers, in order for example to obtain water-repellency.

The solution of polycarbonate-based resin is applied to the textile structure with known methods such as for example foulard, spraying, immersion, etc.

The quantity of the polycarbonate based resin when dry range from 5 g/m2 to 200 g/m2 preferably at 50 to 100 g/m2.

In a preferred embodiment, the viscosity of the solution of polycarbonate-based resin is set up in order to allow the complete impregnation of all the fibres of the yarns forming the structure itself.

Alternatively, if a higher flexibility is the target, the viscosity of the solution is increased by changing the ratio solvent/polycarbonate. The increased viscosity of the solution do not permit the wetting of all the fibres of the yarns, thus leaving some fibres non-impregnated. The fraction of fibres not impregnated with the solution of polycarbonate-based resin can be further impregnated with an additional resin of different composition. This additional resin, for example, can be elastomeric, thermosetting, thermoplastic or visco-elastic, also in a mixture.

This additional resin advantageously has a tensile elastic modulus at least 10% lower than the tensile elastic modulus of the polycarbonate-based resin.

Also in this case, these polymers can be blended with fillers.

This further resin can also be suitably dissolved in a solvent in a quantity which is such as to obtain a solution having the desired viscosity and be applied with known methods analogous to those already indicated above.

The quantity of this second resin range from 5 g/m² to 100 g/m² in the dry state.

Said additional resin could also be applied in the form of a film, net, powder, felts which can be laminated or applied on one or both surfaces of the textile structure.

After each impregnation of the textile structure with the polycarbonate-based resin or additional resin, the solvent is eliminated by known methods for example in specific ovens.

The textile structure thus treated, i.e. after elimination of the solvent, is subjected to calendering or pressing, preferably continuous pressing, in order to reduce its thickness by at least 10% with respect to the value corresponding to the weaving phase.

For this purpose, the impregnated textile structure is subjected to a pressure of at least 10 bar at a temperature of ≥200°C.

In a preferred embodiment, a pressure of at least 80 bar is applied, at a temperature of 200°C, for several tens of seconds a reduction in the thickness of the textile structure of at least 15% is obtained.

The application of such a high pressure also increases what is technically known in the field as "coverage factor".

Figures 3 and 4 show a sectional view of the fabric 1 before and after pressing that make evidence of the modification of the section of the yarn from circular to a substantially "flattened" and the improved spreading.

By this way the ballistic performances of the structure against bullets and sharp and/or pointed elements are increased.

It has been surprisingly found that the polycarbonate-based resin has a limited adhesion to the fibres of ballistic yarns used for the production of the textile structures, scope of the invention.

The low value of adhesion of the polycarbonate-based resin, results surprisingly useful for the purposes of the present invention. In this way, in fact, the fibres of ballistic yarns, when struck by a bullet, can absorb and dissipate the high energy correlated with the impact of projectiles by elastic elongation and by delamination.

It has also been found that the polycarbonate-based resin applied in solution according to the present invention, also gives to the material impregnated with it, an adequate resistance to the penetration of sharp and/or pointed elements.

The energy correlated with the penetration of sharp and/or pointed elements is generally in the order of 50 J, much lower than the energy correlated to the impact of a projectile which is generally greater than 1,000 J. The energy correlated with the penetration of sharp and/or pointed elements is not enough to separate the fibres joined to each other by the matrix, thus the fabrics present a monolithic surface which cannot be easily penetrated by sharp and/or pointed elements.

It has thus been found that with the application of a polycarbonate-based resin, which in itself is rigid, to a textile structure at least partly produced with ballistic yarns, it is possible to realize textile structures which contemporaneously offer a good resistance to the impact of projectiles and to the penetration of sharp and/or pointed elements.

The reduction of the thickness of the textile structure, at least 10% less than the weaving thickness, gives to said textile structure a greater flexibility.

For example in a textile structure having a thickness of 0.25 mm, for example, a 15% reduction in the thickness confers, according to a well-known mechanical law, to an increase in the flexibility of over 50%.

Finally, the textile structure of the present invention maintains the characteristics of resistance and flexibility substantially unaltered from -30°C to +100°C.

Furthermore, the textile structures of the present invention are advantageously odourless.

The textile structures of the present invention, can be used alone or combined with other materials, such as for example foams, woven fabrics, non-woven fabrics, felts, polymeric films, in particular articles for personal protection, against bullet and sharp and/or pointed elements.

The textile structure and method, scope of the present invention, are illustrated with reference to the following non-limiting examples.

EXAMPLE 1 weft and warp fabric with polycarbonate-based resin in the form of a copolymer.

A weft and warp fabric was woven with ballistic yarns count 550 dtex.

The weight of this fabric was 155 g/m² with a thickness of 0.23 mm, and a density of 13.2 yarn/cm in weft and 13.2 yarn/cm in warp.

A BPA + BPTMC copolymer as polycarbonate-based resin was dissolved in ethylacetate in ratio 25% - 75%.

The fabric was totally impregnated with this solution and then dried.

The quantity of resin in the dry state applied to the fabric was 45 g/m².

The fabric thus obtained was pressed at 80 bar, at a temperature of 220°C for a time of about 30 seconds.

The final thickness was 0,19 mm (fabric 1). 34 layers of fabric 1 size 40x40 mm simply laid one over the other was tested according to the HOSDB Standard level HG₂ KR₂ with the following results:

| | |
|---|---|
| - test with knife | = passed |
| - test with bullet | = passed |

### EXAMPLE 2

The same fabric as per example 1 was impregnated with a solution of 50% solvent and 50% polycarbonate adjusting the viscosity in order to wet only 70% of the fiber.

The final quantity of dry resin was 31 g/m². After pressing at 80 Bar on 220°C for 30 seconds the thickness was 0.18 mm (fabric 2)
34 layers of the fabric (2) was tested according to HOSDB Standard level HG₂ KR₂ with the following results:

| | |
|---|---|
| - test with knife | = passed |
| - test with bullet | = passed. |

### EXAMPLE 3

A warp and weft fabric as per example 1 was totally impregnated with a mixture of resin composed by 90% copolymer of polycarbonate and 10% of polybutene dissolved in proper solvent; after the evaporation of the solvent the dry quantity of resin applied was 45 g/m².
34 layers of this fabric laid one over the other together was tested following the HOSDB Standard level HG₂ KR₂

| | |
|---|---|
| - test with knife | = passed |
| - test with bullet 9 mm | = passed |
| - test with bullet 0,357 | = passed |

### EXAMPLE 4 (comparative)

A plain fabric warp and weft density 12.2x12.2 yarn count 440 dtex was impregnated with phenolic resin. With 43 layers of the fabric areal density of 6,800 kg/m² was tested in the same way with the following results:

| | |
|---|---|
| - test with knife | = passed |
| - test with 9 mm | = failed |
| - test with 0,357 SP | = failed |

### EXAMPLE 5 (comparative)

A plain weave warp and weft fabric weight 190 g/m² density 8.6x8.6 yarn count 1100 was laminated on both sides with an ionomeric film of 45 g/m² for a total quantity of 90 g/m² with the following results:

| | |
|---|---|
| - test with knife | = passed |
| - test with 0,357 SP | = failed |

### EXAMPLE 6 (comparative)

A textile structure composed by two plain weave, warp and weft fabric 140 g/m² density 7.4x7.4 yarn/cm where in between the two layers a PC film of 80 g/m2 is inserted was laminated together.
19 layers for a total weight of 6.800 kg/m² was tested with the same HOSDB test level HG₂ KR₂ with the following results:

| | |
|---|---|
| - test with knife | = passed |
| - test with bullet 9 mm | = failed |
| - test with bullet 0,357 | = failed |

## Claims

1. A textile structure that combines resistance against impact of bullets and resistance to penetration of sharp and or pointed elements, at least partially realized with ballistic yarn, **characterized in that** it is at least partially impregnated with a polycarbonate based resin in form of omopolymer or copolymer or with a polycarbonate based resin in form of omopolymer or copolymer blended with other polymers, dissolved in solvent; said structure having a thickness at least 10% lower than the thickness after weaving.

2. The textile structure according to claim 1, **characterized in that** said polycarbonate-based resin is a mixture containing at least 10% in weight of polyester of the carbonic acid of bisphenol-A.

3. The textile structure according to claim 1, **characterized in that** said resin is a copolymer in which the repetitive units are made at least by 10% ester of the carbonic acid of bisphenol-A.

4. The textile structure according to claim 3, **characterized in that** the remaining repetitive units of said copolymer are represented by 1-1-bis(4-hydroxyphenil)-3,3,5-trimethylcyclohexane (BPTMC).

5. The textile structure according to one or more preceding claims, **characterized in that** said resin has the following characteristics:
- elongation at break > 100%, measured according to ISO-Norm RS27;
- tensile modulus ≥ 1500 MPa, measured according to ISO-Norm R527;
- no impact fracture according to Charpy norm tested at -30°C, according to ISO-Norm 179-1 EU.

6. The textile structure according to one or more previous claims, **characterized in that** its thickness at least 10% lower than the thickness corresponding to its weaving phase, after the application of a pressure of at least 10 bar.

7. The textile structure according to one or more previous claims, **characterized in that** it comprises weft and warp fabric, which is at least partially realized with ballistic yarns, or a structure where two layers of unidirectional yarns are interconnected by a secondary structure and where the two layers of unidirectional yarns are disposed mutually at an angle of 90°+/-5%, where at least portion of said unidirectional yarns are ballistic yarns and where at least portion of the yarns of the secondary structure are ballistic yarns.

8. The textile structure according to one or more of the preceding claims, **characterized in that** the number of fibres impregnated with said polycarbonate-based resin amount to at least 10% of the total number of fibres.

9. The textile structure according to one or more claims, **characterized in that** it comprises a quantity of said polycarbonate-based resin in dry state between 5 g/m² and 200 g/m².

10. The textile structure according to one or more claims, **characterized in that** the fraction of fibres not impregnated with said polycarbonate-based resin is impregnated with a further resin of an elastomeric, plastomeric, thermosetting or visco-elastic polymer, also in mixture between them.

11. The textile structure according to claim 10, **characterized in that** it comprises a quantity of said further resin in the dry state comprised between 5 g/m² and 100 g/m².

12. The textile structure according to one or more of the preceding claims, **characterized in that** said ballistic yarns are continuous yarns also twisted, texturized, taslanized, with a count comprised between 25 dtex and 10000 dtex with the following mechanic characteristics:
- tensile strenght ≥ 7 g/dtex (according to ISO-Norm 627-1-2)
- tensile modulus ≥ 200 g/dtex (according to ISO-Norm R527)
- breaking energy ≥ 8 J/g (according to ASTMD Norm 2256)

13. A production method of a textile structure resistant to the impact of bullets and to the penetration of sharp and/or pointed elements, according to one or more claims 1 to 12, comprising the phases consisting in:
a) forming a textile structure at least partially realized with ballistic yarns;
b) impregnating at least partially said textile structure with a polycarbonate-based resin, in form of omopolymer, copolymer or in mixture with other polymers, dissolved in a solvent;
c) eliminate from the impregnated textile structure the solvent used for the solution,
d) press the impregnated dried structure in order to reduce its thickness of at least 10%.

14. The method according to claim 13, also comprising, after the elimination of the solvent c) and before said pressing phase d), a further impregnation phase of said textile structure with a further resin.

15. The method according to claim 14, in which said further resin is dissolved in a solvent and applied to the textile structure, a further elimination phase from the textile structure, so further impregnated, of the solvent used for the solution of said further resin, being provided before said pressing phase d).

16. The method according to one or more claims 13 to 15, in which said forming consists in overlapping at an angle of 90° +/-5° two layers of unidirectional yarns and interconnecting the two layers with an additional structure type warp and weft in which at least a portion of said unidirectional yarns and at least a portion of the yarn of the additional structure is realized in ballistic yarn.

17. The method according to one or more claims 13 to 16, in which said polycarbonate-based resin is a mixture containing at least 10% in weight of polyester of the carbonic acid of bisphenol-A or a copolymer in which the repetitive units are made for at least 10% by an ester of the carbonic acid of bisphenol-A.

18. The method according to claim 19, in which said polycarbonate-based resin is a copolymer in which the remaining repetitive units are represented by 1-1-bis(4-hydroxyphenil)-3,3,5-trimethylcyclohexane (BPTMC).

19. The method according to one or more claims 13 to 18, in which said polycarbonate-based resin has following characteristics:
- elongation at break > 100%, measured according to ISO-Norm RS27;
- tensile modulus ≥ 1500 MPa, measured according to ISO-Norm R527;
- no impact fracture according to Charpy norm conducted on a sample at the temperature of -30°C, according to ISO-Norm 179-1 EU.

20. The method according to one or more claims 13 to 19, in which said phase of pressing consists in the application of a pressure of at least 10 bar at a temperature of at least 200°C in order to reduce its thickness at least 10%.

21. The method according to one or more claims 13 to 20, in which said pressing consists in the application of a pressure of at least 80 bar at a temperature of at least 220°C in order to reduce its thickness at least 15%.
